# NEW EUROPEAN PATENT SPECIFICATION

(11) **EP 0 219 162 B2**
(45) Date of publication and mention of the opposition decision: **06.08.1997**
(45) Mention of the grant of the patent: 31.01.1990
(21) Application number: 86201720.9
(22) Date of filing: 03.10.1986
(51) Int. Cl.: B23C 5/22, B23D 61/06

(54) **Rotating cutting saw**
Rotierendes Sägeblatt
Scie rotative

(30) Priority: 11.10.1985 NL 8502790
(43) Date of publication of application: 22.04.1987
(73) Proprietor: KOMEETSTAAL HOLDING B.V., NL-7005 AN Doetinchem (NL)
(72) Inventor: Smolders, Cornelis, NL-6903 VP Zevenaar (NL)
(74) Representative: van der Beek, George Frans, Ir.

(56) References cited:
- DE-A- 2 549 757
- DE-A- 2 734 936
- DE-C- 2 354 481
- GB-A- 21 297
- JP-A- 6 022 219
- US-A- 830 779
- US-A- 1 048 181
- US-A- 1 699 747
- US-A- 1 699 749
- US-A- 3 229 350
- US-A- 3 307 242
- US-A- 4 009 742
- US-A- 4 289 244
- US-E- 20 722

## Description

The invention relates to a rotatable cutting saw comprising a series of cutting elements fastened detachably around the substantially circular outer periphery of a disc at regular intervals from each other in recesses in the periphery of the disc, each by means of a wedge-shaped arrangement, each cutting element having a V-shaped profiled leading edge and a profiled trailing edge, one of which edges being engaged with a complementarily-shaped one edge of the recess in the disc, each wedge-shaped arrangement having a V-shaped profiled leading edge and a V-shaped profiled trailing edge, one edge of the wedge-shaped arrangement being engaged with a complementarily-shaped other edge of the recess in the disc and the opposite edge of the wedge-shaped arrangement being engaged with a complementarily-shaped other edge of the cutting element, which each recess having an inner face which serves as a stop surface for radial location of the cutting element, wherein both the leading edge(s) and the trailing edge of the cutting element are V-shaped with their respective ridges protruding outwardly away from each other, each cutting element has a single inner face serving as a stop face and the V-shaped profiled edges of each wedge-shaped arrangement define grooves with their troughs facing towards each other.

A rotatable cutting saw of this type is known from DE-C-2354481. In this known rotatable cutting saw the cutting elements are fastened by means of an excenter which with pressure elements is placed between the leading edge of the cutter element and the leading edge of the recess. The cutting element with his V-shaped and trailing ridges can be manufactured with high precision. The recess and the V-shaped leading ridge, a V-shaped bottom ridge and a V-shaped trailing groove which receives the cutting element and the excenter arrangement is made of a plurality of elements. Accordingly there exist a large number of locations where manufacturing tolerances can play a role. Although tensioning by means of an excenter can be done with a tool which measures the moment and therewith the tension so that said tensions can be equal there is no certainty with respect to the precise extension of the line of force generated by the excenter and if said force is not perpendicular to the ridge of the cutting element there will be an inwardly or outwardly directed force component which in case of vibrations, which with a rotating cutting saw often occur, can lead to problems in holding the cutting elements in place, the more since the cutting elements have opposite V-shaped ridges which are parallel to each other so that there is no safety against centrifugal forces under all circumstances.

The object of the invention is to provide a rotatable cutting saw permitting simple manufacture with great precision and with a fastening of the cutting elements which permits rapid and easy replacement without any danger of change in the rate of retention of each cutting element.

This object is achieved according to the invention in that the leading and trailing edges of each cutting element within the recess extend relative to each other at an angle which opens in the radial direction towards the axis of the disc,
each wedge-shaped arrangement within the recess is a single wedge and is placed between the trailing edge of the cutting element and the trailing edge of the recess,
and each wedge is fastened and tensioned by means of a single screw which fits in a screw-threaded bore in the disc, which bore extends from the inner face of the recess into the disc. The feature according to which leading and trailing edges of the cutting element extend at an angle which opens in the radial direction towards the axis of the disc ensures that the cutting elements cannot leave the recess under the influence of centrifugal forces.

It is observed as well that from US-A-4009742 a circular cutting tool is known in the form of a fraser having spaced around its circumference a number of cutting blades held in place by a wedge, each wedge being tensioned by a plurality of screws which can be reached from the outer side and extend into screw thread in a bore of the carrier body. The cutting blade has flat leading and trailing sides which extend at a slight angle opening inwardly but the teaching of this publication is only how to sharpen the edge of the blades in a manner which does not change the radial position of the cutting edge with respect to the axis of rotation. How to solve the object of the invention in case of a circle saw cannot be derived from it.

According to the invention cutting elements can now be manufactured with high precision in respect to the angle of the V-shaped ridges, their mutual distance and inclination and the distance between the single abutting face towards the cutting outer edge of the cutting element. The V-shaped grooves which can be manufactured with less precision are on the wedge. They take up tolerances but, due to the fact that the wedges are tensioned by means of a screw, all wedges and accordingly all cutting elements can be tensioned with the same measurable moment.

Replacement is easy. The stop surface at the inside end of the cutting element are preferably perpendicular to the radius and the rear edge of the cutting elements preferably as well is parallel to the radius of the carrier which promotes manufacturing with great precision since the distance between the cutting edge and the stop surface can be determined accurately, e.g. through grinding.

According to the invention the center line of the screw connection can be parallel to the trailing edge of the wedge. This promotes manufacturing with great precision and placing of the wedge with its internal face extending perpendicular to the center line of the screw.

It is observed that from DE-A-2 734 936 a rotatable cutting unit is known in which cutting plates are held against a circumferentially oriented abutting face by means of a split wedge which is tensioned by means of a conical nut on a screw threaded pin fastened in the carrier body. This allows tensioning to substantially the same amount at each cutting element, but does not teach how to tension a cutting element inwardly against a stop surface with simultaneous precise positioning in circumferential direction.

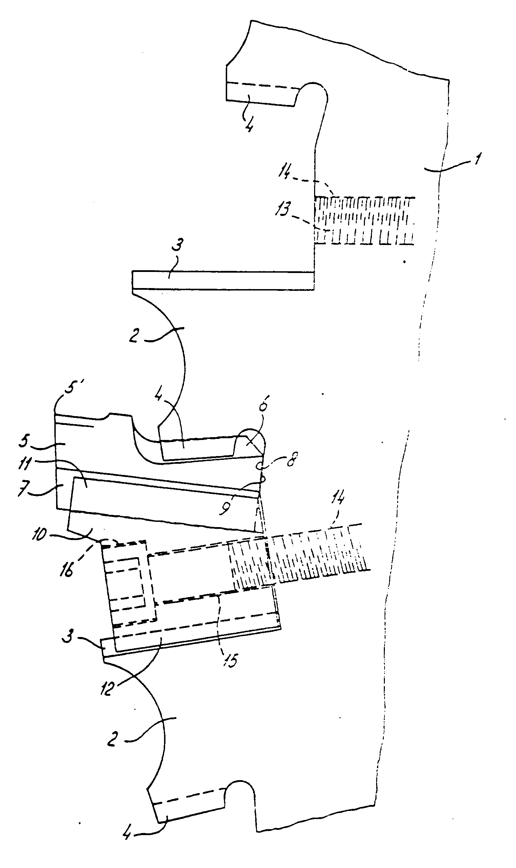

The invention will now be explained in greater detail with reference to the drawing.

It shows part of a circular saw in side view. The circular saw shown in the drawing consists of a disc 1, which is attached to a shaft which is not shown. This disc 1 has placed at regular intervals from each other projections 2 with a V-shaped front edge 3 and a rear edge 4 which is designed in the form of a V-shaped groove. Both edges form an angle with the radius, which in the case of the front edge can be 15° and in the case of the rear edge can be 0°. Shown at 5 is a cutter with cutting edge 5'. This cutter has a V-shaped front edge 6 and, facing in the opposite direction, a V-shaped rear edge 7. The edge 6 and the edge 7 form an angle with each other, for example of 10° which opens in the direction of the disc. The disc also has a stop surface 8 which mates with the inside end 9 of the cutter.

The fastening takes place with a retaining piece 10, which is provided with a V-shaped front edge 11, in the form of a groove, and with a V-shaped rear edge or groove 12 which mates with the V-shaped front edge 3 of the projection 2 of the disc.

The disc has bores 14 provided with screw thread 13 for accommodating a screw which goes through the bore 15 of the retaining element 10 and has a head which is sunk in a recess 16 of the retaining element.

For fastening of a cutter by means of the retaining element, the retaining element will be moved by means of the screw towards the disc and fixed, while at the same time the cutter is taken in the same direction until its inside edge 9 comes against the stop surface 8. The angle between the front edge 6 and the rear edge 7 of the cutter ensures good retention, a retention which can only be reinforced if stress occurs.

## Claims

1. Rotatable cutting saw comprising a series of cutting elements (5) fastened detachably around the substantially circular outer periphery of a disc (1) at regular intervals from each other in recesses in the periphery of the disc, each by means of a wedge-shaped arrangement (10), each cutting element having a V-shaped profiled leading edge (6) and a profiled trailing edge (7), one of which edges being engaged with a complementarily-shaped one edge of the recess in the disc, each wedge-shaped arrangement having a V-shaped profiled leading edge (11) and a V-shaped profiled trailing edge (12), one edge of the wedge-shaped arrangement being engaged with a complementarily-shaped other edge of the recess in the disc and the opposite edge of the wedge-shaped arrangement being engaged with a complementarily-shaped other edge of the cutting element, which each recess having an inner face (8) which serves as a stop surface for radial location of the cutting element (5), wherein both the leading edge(s) and the trailing edge of the cutting element are V-shaped with their respective ridges protruding outwardly away from each other, each cutting element has a single inner face (9) serving as a stop face and the V-shaped profiled edges of each wedge-shaped arrangement define grooves with their troughs facing towards each other, characterized in that, the leading and trailing edges (6, 7) of each cutting element (5) within the recess extend relative to each others at an angle which opens in the radial direction towards the axis of the disc,
each wedge-shaped arrangement within the recess is a single wedge (10) and is placed between the trailing edge (7) of the cutting element (5) and the trailing edge (3) of the recess,
and each wedge (10) is fastened and tensioned by means of a single screw (15) which fits in a screw-threaded bore in the disc (1), which bore extends from the inner face of the recess into the disc.

2. Cutting saw as claimed in claim 1, characterized in that, the trailing edge (7) of the cutting element (5) extends parallel to the radius of the disc (1).

## Patentansprüche

1. Drehschneidsäge mit einer Reihe von Schneidelementen (5), die lösbar auf dem im wesentlichen kreisförmigen Umfang einer Scheibe (1) in regelmäßigen Abständen voneinander in Ausnehmungen in dem Umfang der Scheibe jeweils mittels einer keilförmigen Anordnung (10) festgelegt sind, wobei jedes Schneidelement eine V-förmig profilierte Vorderkante (6) und eine profilierte Hinterkante (7) aufweist, von welchen Kanten eine mit einer komplementär geformten einen Kante der Ausnehmung in der Scheibe im Eingriff steht, jede keilförmige Anordnung eine V-förmig profilierte Vorderkante (11) und eine V-förmig profilierte Hinterkante (12) aufweist, eine Kante der keilförmigen Anordnung mit einer komplementär geformten anderen Kante der Ausnehmung in der Scheibe im Eingriff steht und die gegenüberliegende Kante der keilförmigen Anordnung mit einer komplementär geformten anderen Kante des Schneidelements im Eingriff steht, jede Ausnehmung eine innere Fläche (8) hat, die als eine Anschlagfläche für die radiale Positionierung des Schneidelements (5) dient und beide, die Vorderkante(n) und die Hinterkante des Schneidelements V-förmig sind und die jeweiligen Grate voneinander weg nach außen vorspringen, jedes Schneidelement eine einzige innere Fläche (9) hat, die als eine Anschlagfläche dient und die V-förmig profilierten Kanten jeder keilförmigen Anordnung Nuten bilden, deren Vertiefungen einander zugewandt sind, dadurch gekennzeichnet, daß die Vorder- und Hinterkanten (6, 7) jedes Schneidelements (5) sich innerhalb der Ausnehmung relativ zueinander unter einem Winkel erstrecken, der sich in radialer Richtung zur Achse der Scheibe hin öffnet,
wobei jede keilförmige Anordnung innerhalb der Ausnehmung ein einziger Keil (10) ist und zwischen der Vorderkante (7) des Schneidelements (5) und der Hinterkante (3) der Ausnehmung angeordnet ist,
und jeder Keil (10) mittels einer einzigen Schraube (15) festgelegt und festgespannt ist, die in eine Gewindebohrung in der Scheibe (1) paßt, welche Bohrung sich von der inneren Fläche der Ausnehmung in die Scheibe erstreckt.

2. Schneidsäge nach Anspruch 1, dadurch gekennzeichnet, daß die Hinterkante des Schneidelements (5) sich parallel zu dem Radius der Scheibe (1) erstreckt.

## Revendications

1. Scie de coupe rotative comprenant une série d'éléments rotatifs (5) fixés de manière amovible autour de la périphérie externe pratiquement circulaire d'un disque (1) à intervalles réguliers l'un de l'autre dans des évidements dans la périphérie du disque, chaque élément étant fixé à l'aide d'un élément en forme de coin (10), chaque élément de coupe ayant un bord avant (6) profilé en forme de V et un bord arrière (7) profilé, l'un de ces bords étant associé à un bord de forme complémentaire de l'évidement dans le disque, chaque élément en forme de coin ayant un bord avant (11) profilé en forme de V et un bord arrière (12) profilé en forme de V, l'un des bords de l'élément en forme de coin étant associé à l'autre bord de forme complémentaire de l'évidement du disque et le bord opposé de l'élément en forme de coin étant associé avec un autre bord de forme complémentaire de l'élément de coupe, chaque évidement ayant une surface interne (8) qui sert de surface de butée pour le positionnement radial de l'élément de coupe (5), le (les) bord(s) avant et le bord arrière de l'élément de coupe étant tous deux en forme de V leurs nervures respectives s'écartant vers l'extérieur l'une de l'autre, chaque élément de coupe comportant une seule surface interne (9) servant de surface de butée et les bords profilés en forme de V de chaque élément en forme de coin définissant une gorge dont les creux se font face, caractérisée par le fait que les bords avant et arrière (6, 7) de chaque élément de coupe (5) dans l'évidement, s'écartent l'un de l'autre en formant un angle qui s'ouvre dans la direction radiale vers l'axe du disque,
que chaque élément en forme de coin dans l'évidement est constitué d'un seul coin (10) et qu'il est placé entre le bord arrière (7) de l'élément de coupe (5) et le bord arrière (3) de l'évidement,
et que chaque coin (10) est fixé et serré à l'aide d'une seule vis (15) qui est vissée dans un trou taraudé ménagé dans le disque (1), ce trou s'étendant dans le disque à partir de la face interne de l'évidement.

2. Scie de coupe selon la revendication 1, caractérisée par le fait que le bord arrière (7) de l'élément de coupe (5) s'étend parallèlement au rayon du disque (1).
